(19) Europäisches Patentamt
European Patent Office
Office européen des brevets

(11) **EP 1 997 417 A2**

(12) **EUROPÄISCHE PATENTANMELDUNG**

(43) Veröffentlichungstag:
**03.12.2008  Patentblatt 2008/49**

(51) Int Cl.:
***A47L 9/28*** *(2006.01)*

(21) Anmeldenummer: **08008699.4**

(22) Anmeldetag: **09.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **30.05.2007   DE 102007025388**

(71) Anmelder: **Miele & Cie. KG**
**33332 Gütersloh (DE)**

(72) Erfinder:
• **De Doncker, Rik**
**3000 Leuven (BE)**
• **Fiedler, Jens**
**44225 Dortmund (DE)**
• **Gerhards, Manfred**
**53879 Euskirchen (DE)**
• **Kiefer, Andreas**
**53115 Bonn (DE)**

(54)   **Verfahren zum Betreiben eines Staubsaugers**

(57)    Die Erfindung betrifft ein Verfahren zum Betreiben eines Staubsaugers (1) mit einem Sauggebläse (2), welches durch einen Gebläsemotor (14) angetrieben wird, und mit einer auf den Gebläsemotor (14) einwirkenden Regeleinrichtung (15), welche als Stellgröße die Motorleistung bzw. einen die Motorleistung beeinflussenden Parameter vorgibt und dabei den mittels des Sauggebläses erzielten Unterdruck berücksichtigt. Um eine einfache und effiziente Unterdruckregelung zu gewährleisten, wird vorgeschlagen, dass die Regeleinrichtung (15) den Unterdruck aus der Motordrehzahl und einer mit der Leistung des Gebläsemotors (14) korrelierenden Kenngröße ermittelt.

Fig. 1

EP 1 997 417 A2

**Beschreibung**

Die Erfindung betrifft ein Verfahren zum Betreiben eines Staubsaugers mit einem Sauggebläse, welches durch einen Gebläsemotor angetrieben wird, und mit einer auf den Gebläsemotor einwirkenden Regeleinrichtung, welche als Stellgröße die Motorleistung bzw. einen die Motorleistung beeinflussenden Parameter vorgibt und dabei den mittels des Sauggebläses erzielten Unterdruck berücksichtigt.

Bei Staubsaugern wird die Saugkraft durch ein hochtouriges Gebläse erzeugt. Dieses drückt die Luft aus dem Staubsaugergehäuse heraus, so dass auf der Gegenseite infolge des entstehenden Unterdrucks Außenluft mit hoher Geschwindigkeit einströmt. Die Größe des erzeugten Unterdrucks ist etwa dem Quadrat der Gebläsedrehzahl proportional, was bedeutet, dass über die Drehzahl des Gebläsemotors die Saugleistung an der Düse verändert werden kann. Die Saugleistung hängt aber nicht nur vom Unterdruck, sondern auch von der aufgesaugten Luftmenge ab, sie ist das Produkt aus Unterdruck und Luftmenge. Da andererseits auch zwischen Unterdruck und Luftmenge ein linearer Zusammenhang besteht - je größer die aufgesaugte Luftmenge, desto geringer der Unterdruck - wird die maximal mögliche Saugleistung dann abgegeben, wenn im Arbeitspunkt Luftmenge und Unterdruck die Hälfte ihres Höchstwertes besitzen. Bei jeder Abweichung von diesem optimalen Arbeitspunkt ändern sich Luftmenge und Unterdruck und damit die effektive Saugleistung. Eine solche Verschiebung des Arbeitspunkts tritt in der Praxis immer dann auf, wenn der Querschnitt des Luftwegs im Bereich zwischen dem Lufteintritt und dem Gebläse verändert wird. Dieser Querschnitt ist abhängig vom gewählten Saugwerkzeug, vom Durchfluss und damit vom Füllzustand des Staubbeutels oder ähnlicher Abscheider, vor allem aber von der zu reinigenden Oberfläche. Es hat sich gezeigt, dass sowohl bei hochflorigen Teppichen als auch bei angesaugten Objekten, sich der Durchfluss der angesaugten Luft verringert und der durch das Sauggebläse hervorgerufene Unterdruck steigt. Durch die Charakteristik des Staubsaugermotors wird dieser Effekt meist noch dadurch verstärkt, dass durch das geringere Lastmoment die Drehzahl des Motors ansteigt und dadurch der Unterdruck weiter verstärkt wird. Die Folge ist ein Festsaugen der Saugdüse an der Oberfläche oder an einem Objekt durch den beschriebenen, zu hohen Unterdruck. Nachteiligerweise können hierdurch sehr hohe Schiebekräfte am Staubsauger auftreten. Außerdem ist auf Grund der fehlenden Kühlluft eine schnelle Überhitzung der Leistungselektronik sowie des Motors leicht möglich.

Es ist bekannt, den Staubsauger mit einem manuellen Leistungssteller auszustatten. Vor allem beim Ein- und Ansaugen eines Objektes, wie zum Beispiel eines Vorhanges, muss aber die Saugleistung möglichst schnell reduziert werden, um Schäden am Objekt und am Staubsauger zu vermeiden. Bei Staubsaugern im mittleren und unteren Preisbereich wird deswegen ein sogenanntes Nebenluftventil eingesetzt, siehe beispielsweise DE 10 2004 050 017 A1. Bei Staubsaugern der oberen Preisklasse erfolgt eine automatische Saugleistungsregelung mit Begrenzung des Unterdrucks, siehe beispielsweise DE 44 33 181 C2. Hierzu wird im Luftweg ein Drucksensor eingesetzt, der auf Unterdruckänderungen infolge jeder Änderung der geförderten Luftmenge reagiert. Der Sensor gibt diese Information an die Geräteelektronik weiter, die ihrerseits die Motorleistung und damit die Gebläsedrehzahl ändert, bis ein vorgegebener Wert des Unterdrucks wieder erreicht ist. Bei den heute in Staubsaugern verwendeten Universalmotoren wird die Motorleistung meist mittels einer Phasenanschnittschaltung realisiert. Der Aufwand einer automatischen Leistungsregelung mit Phasenanschnittschaltung ist nachteiligerweise jedoch recht hoch. Der Drucksensor ist üblicherweise ein Schalter, mit dem nur Grenzwerte überwacht werden können, eine kontinuierliche Anpassung des Unterdrucks ist sehr aufwändig. Der Sensor stellt außerdem ein zusätzliches Bauteil dar und erhöht die Produktionskosten.

Es ist Aufgabe der vorliegenden Erfindung, ein Verfahren zur Unterdruckregelung für einen Staubsauger zu schaffen, bei dem die genannten Nachteile vermieden werden, insbesondere ein Verfahren bereitgestellt wird, bei dem eine einfache und effiziente Unterdruckregelung erfolgt.

Zur Lösung dieser Aufgabe wird ein Verfahren mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Regeleinrichtung den Unterdruck aus der Motordrehzahl und einer mit der Leistung des Gebläsemotors korrelierenden Kenngröße ermittelt. Hierdurch wird im Gegensatz zur Verwendung eines schaltenden Sensors eine kontinuierliche und damit genauere Regelung ermöglicht.

Die Regeleinrichtung kann den Unterdruck als Regelparameter zur Einstellung eines vorgegebenen oder maximalen Unterdruckwerts, eines Saugleistungswerts oder eines Wirkungsgrads verwenden.

Insbesondere kann die Regeleinrichtung die Motordrehzahl begrenzen, um eine Überlastung oder Erhitzung und eine zu hohe Geräuschentwicklung zu verhindern. In einer vorteilhaften Ausführungsform des erfindungsgemäßen Verfahrens begrenzt die Regeleinrichtung die Motordrehzahl derart, dass eine Drehzahl oberhalb einer ersten Drehzahlgrenze ($n_1$) gar nicht und eine Drehzahl oberhalb einer zweiten Drehzahl ($n_2$) nur unter der Bedingung zugelassen wird, dass ein vorgegebener Unterdruck-Wert nicht überschritten wird. Durch die obere Drehzahlgrenze $n_1$ wird die Überlastung des Motors und des Gebläses verhindert, durch die zweite, niedrigere Drehzahlgrenze $n_2$ wird ein Anstieg des Unterdrucks beim Einsaugen von Gardinen o. ä. verhindert bzw. minimiert, so dass eine Beschädigung dieser Teile weitestgehend auszuschließen ist.

Bei dem Gebläsemotor kann es sich um einen Universalmotor handeln, dann ist ein zusätzlicher Sensor zur Erkennung der Drehzahl notwendig. Wenn ein elektronisch kommutierter Motor verwendet wird, so muss zur Bestromung der Ständerwicklung(en) die Position des Rotors bekannt sein. Diese kann entweder durch einen Lagesensor oder rechnerisch aus dem Verlauf des Motorstroms ermittelt werden. In beiden Fällen ist es möglich, aus der zeitlichen Änderung der Position die Drehzahl zu ermitteln, folglich ist kein zusätzlicher Sensor erforderlich. Zum Antrieb eines Staubsaugergebläses wird dann in vorteilhafter Weise ein Reluktanzmotor verwendet, weil dessen Rotor einen robusten Aufbau besitzt, der Drehzahlen im Bereich von 100.000 min-' standhält.

Bei Verwendung eines Reluktanzmotors ist es zweckmäßig, wenn die Regeleinrichtung als Stellgröße den Leitbereich der Ständerwicklung verändert. Dabei kann in vorteilhafter Weise die Leitbereichsänderung stufenlos erfolgen.

Weitere Vorteile, Merkmale und Einzelheiten der Erfindung ergeben sich aus der nachfolgenden Beschreibung, in der unter Bezugnahme auf die Zeichnungen ein Ausführungsbeispiel des erfindungsgemäßen Verfahrens im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:

Figur 1 die schematische Darstellung eines Bodenstaubsaugers;
Figur 2 ein Blockschaltbild der Unterdruck erzeugenden Bauteile eines Staubsaugers;
Figur 3 die Saugleistungskennlinie eines Staubsaugergebläses;
Figur 4 verschiedene Gebläseparameter bei unterschiedlichen Öffnungsquerschnitten;
Figur 5 bis 7 Drehmoment-Drehzahl-Kennlinien;
Figur 8 a, b den prinzipiellen Aufbau eines geschalteten Reluktanzmotors.

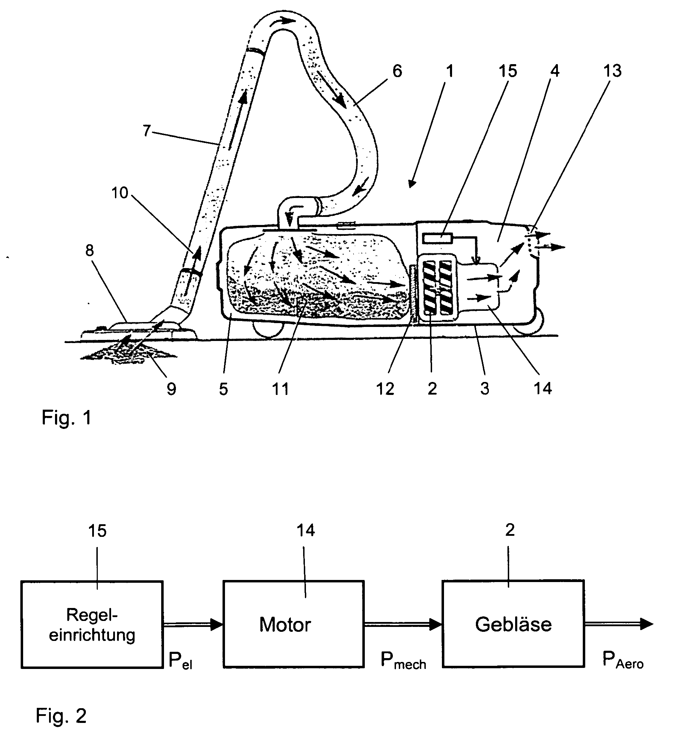

Zur näheren Erläuterung ist in Figur 1 ein Bodenstaubsauger dargestellt, das erfindungsgemäße Verfahren kann jedoch in jedem Staubsauger 1, der mit einem motorbetriebenen Sauggebläse 2 ausgestattet ist, durchgeführt werden. Als weitere, nicht dargestellte Beispiele seien hier Handstaubsauger, Uprights oder Robotsauger genannt. Der gezeigte Staubsauger 1 besitzt ein Gehäuse 3, welches in einen Gebläseraum 4 und einen Staubsammelraum 5 unterteilt ist. Im Gebläseraum 4 ist ein Sauggebläse 2 mit seiner Saugseite zum Staubsammelraum 5 gerichtet und erzeugt dort einen Unterdruck, der über eine angeschlossene Saugleitung 6 und ein Saugrohr 7 an den Saugmund einer Bodendüse 8 weitergegeben wird. Somit wird mit Schmutz 9 beladene Luft, durch die Pfeile 10 symbolisiert, am bearbeiteten Untergrund aufgesaugt, über Staubabscheider gereinigt, im Ausführungsbeispiel ist dies ein Staubbeutel 11 mit nachgeschaltetem Motorfilter 12 und Abluftfilter 13, und derart gereinigt wieder an die Umgebung abgegeben. Die Ansteuerung des Gebläsemotors 14 erfolgt über eine als Kasten symbolisierte Regeleinrichtung, im Allgemeinen ist dies eine Mikroprozessor-Steuerung 15.

Figur 2 zeigt die Bauteilkette eines Staubsaugers 1, durch die der Unterdruck erzeugt wird. Der Motor 14 wird von der Regeleinrichtung 15 mit einer elektrischen Leistung

$$P_{el} = U \cdot I \cdot \cos\varphi \qquad\qquad [1]$$

gespeist und erzeugt die mechanische Leistung

$$P_{mech} = 2\pi \cdot n_{Mot} \cdot M_{Mot} \qquad\qquad [2]$$

Die Saugleistung ($P_{Aero}$) des Gebläses 2 wird durch den erzeugten Unterdruck (p) und die dabei geförderte Luftmenge (Durchfluss q) bestimmt.

$$P_{Aero} = q \cdot p \qquad\qquad [3]$$

Diese drei Leistungen sind über die Wirkungsgrade $\eta_1$ und $\eta_2$ miteinander verknüpft.

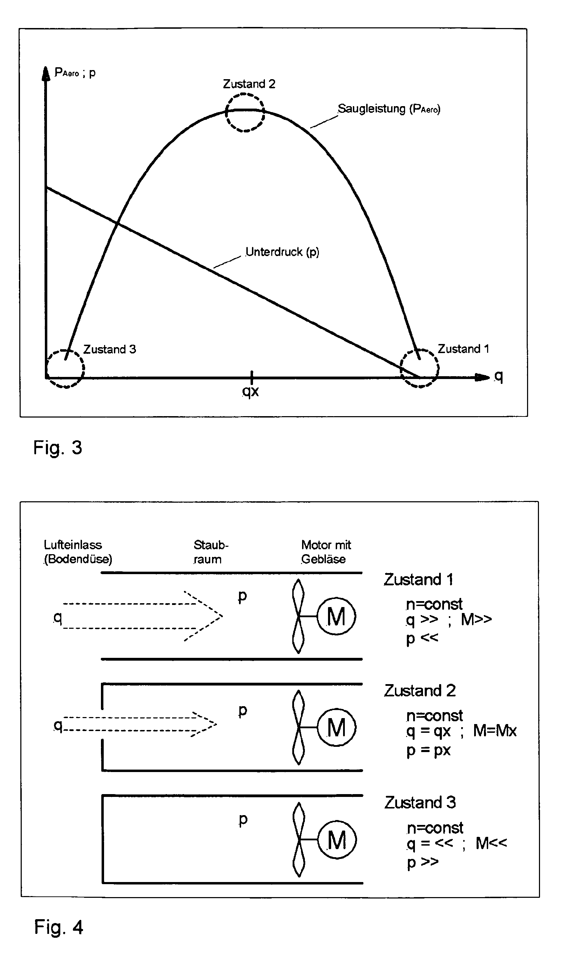

Unterdruck q und Durchfluss p stehen ihrerseits in einer linearen Beziehung, der Durchfluss nimmt mit zunehmendem Unterdruck ab. Figur 3 zeigt in einem Diagramm die Saugleistung und den Durchfluss in Abhängigkeit vom Unterdruck. Abhängig von der zu reinigenden Oberfläche verändern sich Durchfluss und Unterdruck. Sowohl bei hochflorigen Teppichen wie auch bei ungewollt angesaugten Objekten (z.B. Gardinen), verringert sich der Durchfluss und der Unterdruck steigt. Durch die Motorcharakteristik wird dieser Effekt meist noch verstärkt, da der geringere Durchfluss ein niedrigeres Lastmoment (M) zur Folge hat und dadurch die Drehzahl (n) steigt. Diese Drehzahlsteigerung erhöht zusätzlich den erzeugten Unterdruck, da der Unterdruck von der Motor- bzw. Gebläsedrehzahl und dem Lastmoment abhängig ist.

$$p = f(n, M_{Gebl}) \text{ mit } n_{Mot} = n_{Gebl} = n \qquad [4]$$

Figur 4 zeigt den Zusammenhang zwischen Saugleistung, Unterdruck und Durchfluss bei konstanter Drehzahl und unterschiedlichen Durchflussquerschnitten (Blenden) im Lufteinlassbereich der Bodendüse 8.

Zustand 1 (Blende offen): Der maximale Durchfluss kann ungehindert durch den Staubsauger 1 strömen. Das Lastmoment des Motors 14 ist in diesem Zustand am größten. Der Unterdruck geht gegen Null, daher ist auch die Saugleistung sehr niedrig, siehe Figur 3 und [3].

Zustand 2 (Blende dx): Aufgrund des reduzierten Lufteinlasses stellt sich ein bestimmter Durchflusswert (qx) und dadurch auch ein Lastpunkt ein. Es entsteht ein Unterdruck (px) und damit eine Saugleistung $P_{Aero}x$. In Figur 3 ist gut zu erkennen, dass es einen Bereich maximaler Saugleistung gibt, dem bestimmte Wertepaare von Durchfluss und Unterdruck zugeordnet sind. Dieser Bereich wird i. d. R. angestrebt. Da die Wirkungsgradkennlinie einen ähnlichen Verlauf hat wie die Saugleistungskennlinie, ist das auch der Bereich maximaler Effizienz.

Zustand 3 (Blende geschlossen): Der Lufteinlass ist komplett verschlossen, so dass kein Durchfluss mehr möglich ist. Das Lastmoment ist hier am geringsten, da das Gebläse 2 keine Luftmassen transportieren muss. Es entsteht ein hoher Unterdruck innerhalb des Staubsammelraumes 5. Würde die Drehzahl in diesem Zustand nicht konstant gehalten, würde sie aufgrund des geringen Lastmomentes stark ansteigen und den Unterdruck weiter erhöhen. Ohne Durchfluss geht die Saugleistung ebenfalls gegen Null, siehe Figur 3 und [3].

Ziel eines effizienten Staubsaugerbetriebs kann es deshalb sein, die Saugleistung bzw. den Wirkungsgrad zu maximieren oder den Unterdruck selbst zu begrenzen. In jedem Fall muss dafür der Unterdruck bekannt sein.

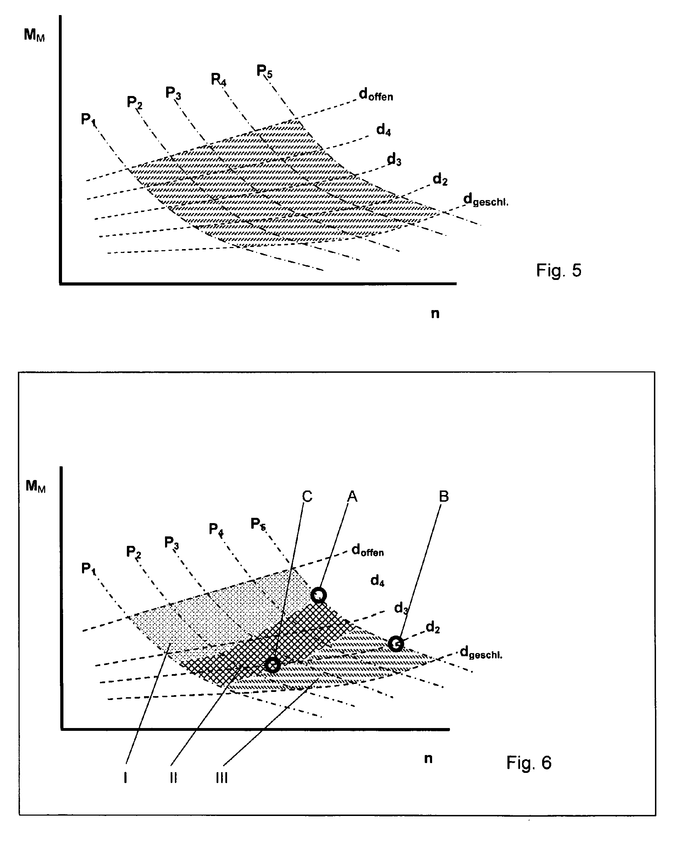

Aus der in Figur 5 dargestellten Drehmoment-Drehzahl-Kennlinie ist ersichtlich, dass das Verhalten des Staubsaugers 1 im Wesentlichen durch die Motoreingangsleistung und die durch das Gebläse 2 und den dort herrschenden Durchfluss hervorgerufene Last bestimmt wird. Die Motoreingangsleistung ist hier als Kurvenschar P1 bis P5 dargestellt, bei konstanter Eingangsleistung gilt die Beziehung

$$M_{Mot} = f(1/n^2) \qquad [5]$$

Die Last ist als Kurvenschar für unterschiedliche Durchflussquerschnitte $d_{geschl}$ bis $d_{offen}$ dargestellt, es gilt bei konstanter Last die Beziehung

$$M_L = f(n^2) \qquad [6]$$

Aus der Figur 5 geht außerdem hervor, dass bei gegebener Last, welche vom Durchfluss und damit wie bereits eingangs erwähnt vom Saugwerkzeug, vom Beutelfüllgrad und von der Bodenbeschaffenheit abhängig ist, die Drehzahl durch Änderung der Motoreingangsleistung variiert werden kann. Aus [4] kann dann für jedes Wertepaar (n, M) ein Unterdruck ermittelt werden. Indirekt ist es also möglich, über die Motoreingangsleistung oder eine die Motoreingangsleistung beeinflussende Stellgröße den Unterdruck oder vom Unterdruck abhängige Größen wie Saugleistung und Wirkungsgrad in dem gesamten gestrichelten Bereich zu regeln. Dazu müssen die Drehzahl und das Motormoment bekannt sein.

Die Drehzahl kann durch spezielle Sensoren gemessen oder anhand von Motorkennwerten ermittelt werden. Als Beispiel ist bekannt, die Drehzahl eines Universalmotors anhand der Motorstrompulsation zu detektieren. Kollektorlose Motoren, wie z.B. der geschaltete Reluktanzmotor, erfordern prinzipbedingt die Kenntnis der Rotorlage und stellen somit die Drehzahl als Regelgröße zur Verfügung. Das Motormoment ist abhängig von der Eingangsleistung. Diese kann über den Motorstrom, Motorspannung oder andere leistungsverändernde Stellgrößen variiert werden. So kann bei einem geschalteten Reluktanzmotor über den Leitbereich das Motormoment eingestellt werden. Dagegen wird bei dem Universalmotor häufig mittels einer Phasenanschnittssteuerung die Spannung, dadurch der Motorstrom und letztendlich damit das Moment variiert.

Der Unterdruck p als Funktion der Drehzahl n und des Motormomentes M kann für verschiedene Wertepaare in Versuchen ermittelt und in einem Speicher der Mikroprozessor-Steuerung abgelegt werden. Figur 6 zeigt beispielhaft eine einfache Unterteilung des regelbaren Bereichs in drei verschiedene Unterdruckzonen, Zone I steht für einen niedrigen, Zone II für einen mittleren und Zone III für einen hohen Unterdruck. Im gezeigten Beispiel wird zuerst im Betriebspunkt A bei einem großen Durchflussquerschnitt $d_4$ (bspw. Parkett) bei maximaler Leistung $P_5$ gesaugt, der Unterdruck ist in einem niedrigen Bereich I. Nun ändert sich der Durchflussquerschnitt von $d_4$ auf $d_2$, da sich die zu saugende Fläche ändert (von Parkett zu Teppich). Ohne Regelung würde sich ein Betriebspunkt B mit hohem Unterdruck (Bereich III) und großer Drehzahl einstellen. Die Information über die Drehzahl und die aktuell eingestellte Leistung wird verwendet, um den Arbeitspunkt im Kennlinienfeld zu detektieren. Die Regeleinrichtung senkt dann die Leistung soweit, dass der Betriebspunkt 2 mit einem Unterdruck in einem akzeptablen Bereich II erreicht wird. Ändert sich der Durchflussquerschnitt erneut, stellt dies die Regelung anhand der Drehzahländerung fest und kann entsprechend reagieren.

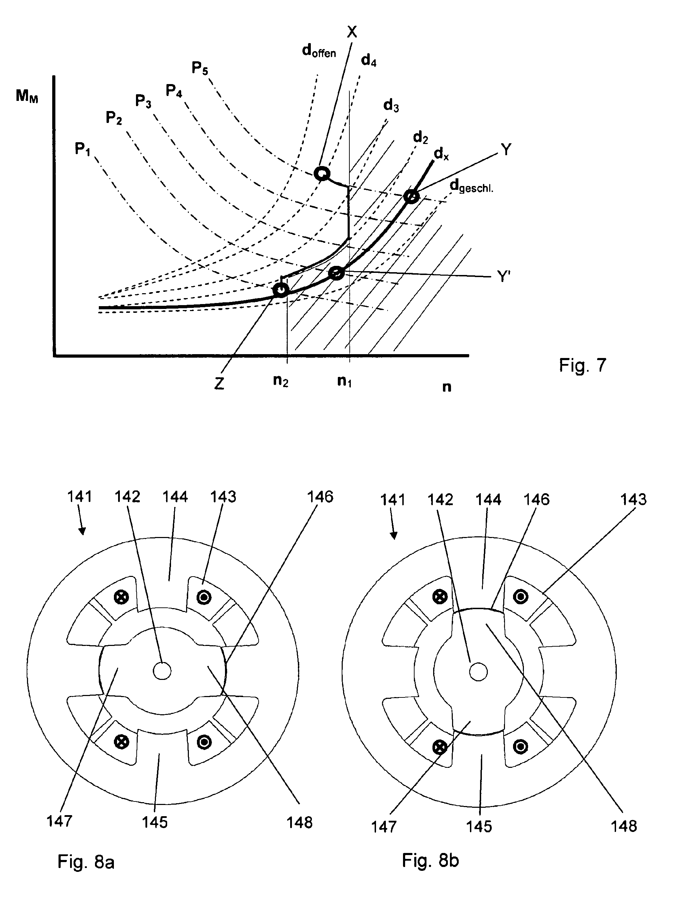

Figur 7 zeigt ein Ausführungsbeispiel einer Regelung, bei der neben der Berücksichtigung des Unterdrucks Grenzen für die Drehzahl gesetzt sind, und zwar derart, dass eine Drehzahl oberhalb einer ersten Drehzahlgrenze ($n_1$) gar nicht und eine Drehzahl oberhalb einer zweiten Drehzahl ($n_2$) nur unter der Bedingung zugelassen wird, dass ein vorgegebener Unterdruck-Wert nicht überschritten wird. Zunächst wird im Betriebspunkt X wieder bei einem großen Durchflussquerschnitt $d_4$ bei maximaler Leistung $P_5$ gesaugt. Der Durchflussquerschnitt ändert sich dann von $d_4$ auf $d_x$ (dicke Linie). Somit würde sich ohne Regelung der Betriebspunkt Y einstellen. Da dann mindestens die Drehzahlgrenze $n_1$ überschritten wird, wird die Leistung verringert. Eine Verringerung auf $P_2$ reicht nicht aus, da der damit erreichte Betriebspunkt Y' die zweite Bedingung - Drehzahl $n_2$ ist nur bei Unterschreiten eines vorgegebenen Unterdrucks zulässig - nicht erfüllt, wird die Leistung weiter auf $P_1$ verringert und ein Betriebspunkt Z eingestellt, in dem beide Bedingungen erfüllt sind.

Im Folgenden ist ein Praxisbeispiel für die Regelung eines Staubsaugergebläses 2 beschrieben, in dem ein geschalteter Reluktanzmotor 141 (siehe Figuren 8a und b) zum Einsatz kommt. Der Vorteil eines geschalteten Reluktanzmotors 141 liegt in seinem einfachen und robusten Aufbau sowie seinen verschleißfreien Bauteilen. Er gehört in die Gruppe der bürstenlosen Antriebe, weist also keinen Kollektor oder verschleißbehaftete Kohlebürsten auf. Des Weiteren besteht sein Rotor 142 ausschließlich aus Eisen, benötigt also weder Elektronoch Permanentmagnete im Rotor. Aus diesem Grund eignet er sich insbesondere für Anwendungen, in denen hohe Drehzahlen benötigt werden, bspw. für Staubsaugergebläse 2.

Anders als bei herkömmlichen Antrieben erzeugt der geschaltete Reluktanzmotor 141 sein Drehmoment nicht durch die Lorenzkraft, sondern durch die Reluktanzkraft. Die Funktion der Maschine beruht darauf, dass Luft im Vergleich zum Eisenmaterial einen sehr hohen magnetischen Widerstand (Reluktanz) besitzt. Wenn die Spulen 143 eines Polpaares der Ständerwicklung bestromt werden, schließt sich der magnetische Fluss, der in den Statorzähnen 144 und 145 erzwungen wird, über den Luftspalt 146 und den Rotor 142. Es entsteht eine Reluktanzkraft die den Rotor 142 in eine Position zwingt, in der der magnetische Widerstand möglichst gering ist. Das heißt, dass der magnetische Fluss größtenteils durch das Eisenmaterial geht und nicht über die Luft. Es gibt im allgemeinen zwei Rotorstellungen in denen das Moment Null ist. Dies ist zum einen die Stellung in der die Rotorpole 147 und 148 den Statorpolen 144 und 145 direkt gegenüber stehen und damit der geringste magnetische Widerstand erreicht ist (ausgerichtete Position Figur 8a) und zum anderen wenn zwei benachbarte Rotorpole (hier die Rotorpole 147 und 148) im gleichen Abstand zum bestromten Statorpol stehen (unausgerichtete Position Figur 8b). Zwischen diesen beiden Positionen entsteht ein Drehmoment, wenn die Spulen des entsprechenden Polpaares 144 und 145 bestromt werden. Um eine kontinuierliche Drehbewegung zu erreichen, müssen die verschiedenen Polpaare abhängig von der Rotorposition nacheinander geschaltet werden. Aus diesem Grund ist es prinzipbedingt notwendig, die Rotorposition des geschalteten Reluktanzmotors 141 zu detektieren. Dies kann durch nicht dargestellte Lagesensoren oder durch ein sogenanntes sensorloses Verfahren erfolgen. Als eines der bekanntesten Methoden sei das Stromgradienten-Verfahren genannt. Hier wird der Stromverlauf im Einpulsbetrieb zur Rotorlagesensierung analysiert.

Die Ansteuerung eines geschalteten Reluktanzmotors 141 erfolgt über einen nicht dargestellten Wechselrichter, dessen Regelungselektronik Leistungsschalter ansteuert und damit die angeschlossenen Spulenpaare in Abhängigkeit von der Rotorlage bestromt. Die Rotorposition vom Einschalten bis zum Ausschalten des Spulenpaares wird als Leitbereich bezeichnet. Innerhalb dieses Bereichs erzeugt der Motor ein Drehmoment. Mit dem Leitbereich variiert man direkt das Motormoment und damit letztendlich die Motorleistung, wie oben beschrieben.

Beim geschalteten Reluktanzmotor hat man damit ohne zusätzliche Sensoren die Kenntnis über die Drehzahl und das Drehmoment in jedem Betriebspunkt und kann über den Leitbereich als Stellgröße das Staubsaugergebläse in den gewünschten Arbeitspunkt regeln. Dieser Arbeitspunkt kann, wie zuvor beschrieben, optimiert werden auf den Unterdruck, die Saugleistung oder den Wirkungsgrad.

**Patentansprüche**

1. Verfahren zum Betreiben eines Staubsaugers (1) mit einem Sauggebläse (2), welches durch einen Gebläsemotor (14) angetrieben wird, und mit einer auf den Gebläsemotor (14) einwirkenden Regeleinrichtung (15), welche als Stellgröße die Motorleistung bzw. einen die Motorleistung beeinflussenden Parameter vorgibt und dabei den mittels des Sauggebläses erzielten Unterdruck berücksichtigt,
**dadurch gekennzeichnet,**
**dass** die Regeleinrichtung (15) den Unterdruck aus der Motordrehzahl und einer mit der Leistung des Gebläsemotors (14) korrelierenden Kenngröße ermittelt.

2. Verfahren zum Betreiben eines Staubsaugers (1) nach Anspruch 1,
   **dadurch gekennzeichnet,**
   **dass** die Regeleinrichtung (15) den Unterdruck als Regelparameter zur Einstellung eines vorgegebenen Unterdruckwerts, Saugleistungswerts oder Wirkungsgrads verwendet.

3. Verfahren zum Betreiben eines Staubsaugers (1) nach Anspruch 2,
   **dadurch gekennzeichnet,**
   **dass** die Regeleinrichtung (15) die Motor- bzw. Gebläsedrehzahl begrenzt.

4. Verfahren zum Betreiben eines Staubsaugers (1) nach Anspruch 3,
   **dadurch gekennzeichnet,**
   **dass** die Regeleinrichtung (15) die Motor- bzw. Gebläsedrehzahl derart begrenzt, dass eine Drehzahl oberhalb einer ersten Drehzahlgrenze ($n_1$) gar nicht und eine Drehzahl oberhalb einer zweiten Drehzahl ($n_2$) nur unter der Bedingung zugelassen wird, dass ein vorgegebener Unterdruck-Wert nicht überschritten wird.

5. Verfahren zum Betreiben eines Staubsaugers (1) nach einem der Ansprüche 1 bis 4,
   **dadurch gekennzeichnet,**
   **dass** als Gebläsemotor (14) ein Universalmotor verwendet wird.

6. Verfahren zum Betreiben eines Staubsaugers (1) nach einem der Ansprüche 1 bis 4,
   **dadurch gekennzeichnet,**
   **dass** als Gebläsemotor (14) ein elektronisch kommutierter Motor verwendet wird.

7. Verfahren zum Betreiben eines Staubsaugers (1) nach Anspruch 6,
   **dadurch gekennzeichnet,**
   **dass** als Gebläsemotor (14) ein geschalteter Reluktanzmotor (141 ) verwendet wird.

8. Verfahren zum Betreiben eines Staubsaugers (1) nach Anspruch 7,
   **dadurch gekennzeichnet**
   **dass** die Regeleinrichtung (15) als Stellgröße den Leitbereich der Ständerwicklung 143 verändert.

9. Verfahren zum Betreiben eines Staubsaugers (1) nach Anspruch 8,
   **dadurch gekennzeichnet**
   **dass** die Leitbereichsänderung stufenlos erfolgt.

**Fig. 1**

**Fig. 2**

| Regel-einrichtung | | Motor | | Gebläse | |
|---|---|---|---|---|---|
| $P_{el}$ | → | $P_{mech}$ | → | $P_{Aero}$ | → |

$P_{Aero}$ ; p

Zustand 2

Saugleistung ($P_{Aero}$)

Unterdruck (p)

Zustand 3

Zustand 1

qx

q

## Fig. 3

Lufteinlass
(Bodendüse)

Staubraum

Motor mit
Gebläse

Zustand 1

n=const
q >> ; M>>
p <<

p

q

Zustand 2

n=const
q = qx ; M=Mx
p = px

p

q

Zustand 3

n=const
q = << ; M<<
p >>

p

## Fig. 4

$M_M$

$P_1$  $P_2$  $P_3$  $R_4$  $P_5$  $d_{offen}$  $d_4$  $d_3$  $d_2$  $d_{geschl.}$

n

Fig. 5

$M_M$

C  A  B

$P_1$  $P_2$  $P_3$  $P_4$  $P_5$  $d_{offen}$  $d_4$  $d_3$  $d_2$  $d_{geschl.}$

I  II  III

n

Fig. 6

Fig. 7

Fig. 8a

Fig. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004050017 A1
- DE 4433181 C2